# EUROPÄISCHE PATENTSCHRIFT

(11) **EP 1 193 385 B1**
(45) Veröffentlichungstag und Bekanntmachung des Hinweises auf die Patenterteilung: **19.03.2008**
(21) Anmeldenummer: 01121801.3
(22) Anmeldetag: 11.09.2001
(51) Int. Cl.: F02D 41/22, F02D 41/14

(54) **Verfahren und Vorrichtung zur Regelung einer Verbrennungskraftmaschine**
Method and device for the control of an internal combustion engine
Procédé et dispositif de contrôle d'un moteur à combustion

(30) Priorität: 27.09.2000 DE 10047811
(43) Veröffentlichungstag der Anmeldung: 03.04.2002
(73) Patentinhaber: Volkswagen Aktiengesellschaft, 38436 Wolfsburg (DE)
(72) Erfinder: Drückhammer, Jens, Dr., 38108 Braunschweig (DE); Wehling, Wolfgang, 38112 Braunschweig (DE)

(56) Entgegenhaltungen:
- DE-A1- 19 860 500
- DE-A1- 19 950 146
- US-A- 5 585 553
- US-A- 5 808 189

## Beschreibung

Die Erfindung betrifft ein Verfahren zur Regelung einer Verbrennungskraftmaschine mit den im Oberbegriff des Anspruchs 1 genannten Merkmalen sowie eine Vorrichtung mit den im Oberbegriff des Anspruchs 12 genannten Merkmalen.

Es ist bekannt, dass eine Verbrennungskraftmaschine (Otto-Motor) zu ihrem Betrieb ein Kraftstoff-Luft-Gemisch benötigt. Von einem Kraftstoff-Luft-Verhältnis innerhalb dieses Gemisches ist der Betrieb der Verbrennungskraftmaschine im Wesentlichen abhängig. Hierdurch ergibt sich beispielsweise ein Kraftstoffverbrauch, eine Leistungsbereitstellung (Drehmoment) und/oder eine Abgasnachbehandlungsmöglichkeit der Verbrennungskraftmaschine. Entsprechend gewünschter Betriebsmodi der Verbrennungskraftmaschine erfolgt bekannterweise eine Veränderung des Mischungsverhältnisses innerhalb des Kraftstoff-Luft-Gemisches.

Zur Gemischbildung ist der Einsatz von Kraftstoff-Einspritzsystemen bekannt, mittels denen der Kraftstoff in eine Verbrennungsluft zugeführt wird. Hier wird zwischen Systemen zur äußeren Gemischbildung und Systemen zur inneren Gemischbildung unterschieden, wobei die Kraftstoffeinspritzung zentral in ein Saugrohr für alle Zylinder der Verbrennungskraftmaschine oder dezentral für jeden der Zylinder der Verbrennungskraftmaschine erfolgen kann. Die Kraftstoff-Einspritzsysteme nutzen eine Druckdifferenz zwischen einem Kraftstoffdruck und einem Saugrohrdruck aus. Entsprechend einer Freigabe eines Kraftstoff-Einspritzventils und einer definierten Druckdifferenz zwischen dem Kraftstoff und der Verbrennungsluft ergibt sich die eingespritzte Kraftstoffmenge. Es wird deutlich, dass zum Einstellen dieser definierten Druckdifferenz und somit zum Festlegen einer definierten Ansteuerung eines Einspritzventils Kenntnisse über den aktuellen Saugrohrdruck erforderlich sind. Dieser beeinflusst unmittelbar die Gemischbildung. Bekannt ist, in einem Saugrohr der Verbrennungskraftmaschine wenigstens einen Saugrohrdrucksensor anzuordnen, dessen Sensorausgangssignal einem Motorsteuergerät zur weiteren Verarbeitung zur Verfügung gestellt wird.

Es wird deutlich, dass schon geringe Saugrohrdruckänderungen zu einer veränderten Gemischbildung beitragen können. Derartige Saugrohrdruckänderungen können auch ungewollt und/oder nur scheinbar sein. Beispielsweise bei einer alterungsbedingten Änderung einer Sensorkennlinie des Saugrohrdrucksensors ergeben sich Abweichungen im Sensorausgangssignal von dem tatsächlichen Ist-Saugrohrdruck. Durch diesen entsprechenden Fehler ergibt sich eine fehlerbehaftete Auswertung im Motorsteuergerät, so dass negative Auswirkungen auf die Gemischbildung nicht auszuschließen sind.

Durch Herstellungstoleranzen des Saugrohrdrucksensors können ebenfalls Abweichungen der Steigung der Ist-Kennlinie von der Soll-Kennlinie auftreten. Insbesondere bei Saugrohrdrücken im unteren Bereich der Sensorkennlinie führen Abweichungen der Steigung bereits zu relativ großen Fehlern.

Aus der allgemeinen Messtechnik sind sogenannte Regressionsrechnungen bekannt, mittels denen eine Näherungskurve aus einer gegebenen Anzahl von Messpunkten bestimmt werden kann. Im Ergebnis der Regressionsrechnung sind Parameter der Näherungskurve, beispielsweise eine Steigung einer Geraden beziehungsweise ein Offset, darstellbar.

Aus der Druckschrift DE 199 50 146 A1 ist ein Verfahren zur Kalibrierung eines Luftmassensensors für den Betrieb- mit einer Verbrennungskraftmaschine bekannt, wobei ein mit Hilfe des Luftmassensensors gemessener Volumenstrom mit einem Referenzwert verglichen wird und bei Feststellen einer Abweichung zwischen dem gemessenen Wert und dem Referenzwert eine Rekalibrierung des Luftmassensensors durchgeführt wird. Der Referenzwert wird aus einer Vielzahl von Messwerten anderer Sensoren in einem stationären Zustand der Verbrennungskraftmaschine berechnet.

Der Erfindung liegt die Aufgabe zugrunde, ein Verfahren und eine Vorrichtung der gattungsgemäßen Art anzugeben, mittels denen in einfacher Weise eine genaue Saugrohrdruckbestimmung von Verbrennungskraftmaschinen durchführbar ist.

Erfindungsgemäß wird diese Aufgabe durch ein Verfahren mit den im Anspruch 1 genannten Merkmalen und eine Vorrichtung mit den im Anspruch 12 genannten Merkmalen gelöst. Dadurch, dass eine Steigung der Ist-Kennlinie des Saugrohrdrucksensors ermittelt wird, eine Abweichung der Steigung von einer Soll-Kennlinie ermittelt wird und aus der Abweichung ein Korrekturwert ermittelt wird, mit dem das Sensorsignal des Saugrohrdrucksensors korrigiert wird, ist vorteilhaft möglich, selbsttätig fortlaufend die Kennlinie des Saugrohrdrucksensors anzupassen. Insbesondere ist so vorteilhaft möglich, bei der Herstellung der Saugrohrdrucksensoren größere Fertigungstoleranzen zuzulassen, da während des bestimmungsgemäßen Einsatzes der Saugrohrdrucksensoren eine automatische Kompensation der vorhandenen Ist-Fehler erfolgt. Hierdurch kommt es zu einer Reduzierung von Produktionskosten, da Anforderungen an Qualitätsüberwachung und dergleichen verringert werden können und andererseits die Ausbeute des Herstellungsprozesses erhöht ist.

Ferner ist vorteilhaft möglich, durch das erfindungsgemäße Verfahren alterungsbedingte Änderungen der Ist-Kennlinie zu kompensieren, so dass die Standzeit des Saugrohrdrucksensors erhöht werden kann.

In bevorzugter Ausgestaltung der Erfindung ist vorgesehen, dass die Steigung der Ist-Kennlinie durch eine Regressionsrechnung ermittelt wird, bei der vorzugsweise die Regressionsrechnung die Ausgangssignale des Saugrohrdrucksensors und ein Ansteuersignal eines Stellgliedes zur Beeinflussung eines Kraftstoff-Luft-Gemisches auswertet. Durch eine derartige Verknüpfung der Signale lässt sich ein Regressionsfaktor ermitteln, der die mittlere Steigung der Ist-Kennlinie im Punkt des Saugrohrdruck-Soll-Wertes darstellt. Dieser Regressionsfaktor kann bevorzugt mit der Soll-Kennlinie des eingesetzten Saugrohrdrucksensors verknüpft werden, so dass ein Korrekturfaktor zur Verfügung steht, mittels dem die Ist-Kennlinie korrigiert werden kann. Hierdurch wird eine exakte Kraftstoff-Luft-Gemisch-Einstellung der Verbrennungskraftmaschine möglich.

Ferner wird durch das erfindungsgemäße Verfahren in einfacher Weise eine Onboard-Diagnose möglich, da durch die Regression die Abweichung der tatsächlichen Ist-Kennlinie des Saugrohrdrucksensors von der idealen Kennlinie ermittelbar ist. Diese Abweichung der tatsächlichen von der idealen Kennlinie kann in einfacher Weise mit einer maximal zulässigen Abweichung verglichen werden, so dass bei Überschreiten der maximal zulässigen Abweichung ein Fehlerfall erkannt wird, der beispielsweise einen Austausch des Saugrohrdrucksensors erfordert.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine schematische Ansicht einer Verbrennungskraftmaschine;
- Figur 2: mögliche Kennlinien eines Saugrohrdrucksensors;
- Figur 3: ein Blockschaltbild der Korrektur der Kennlinie des Saugrohrdrucksensors und
- Figur 4: eine Kennlinie des Saugrohrdrucksensors mit Toleranzbereich.

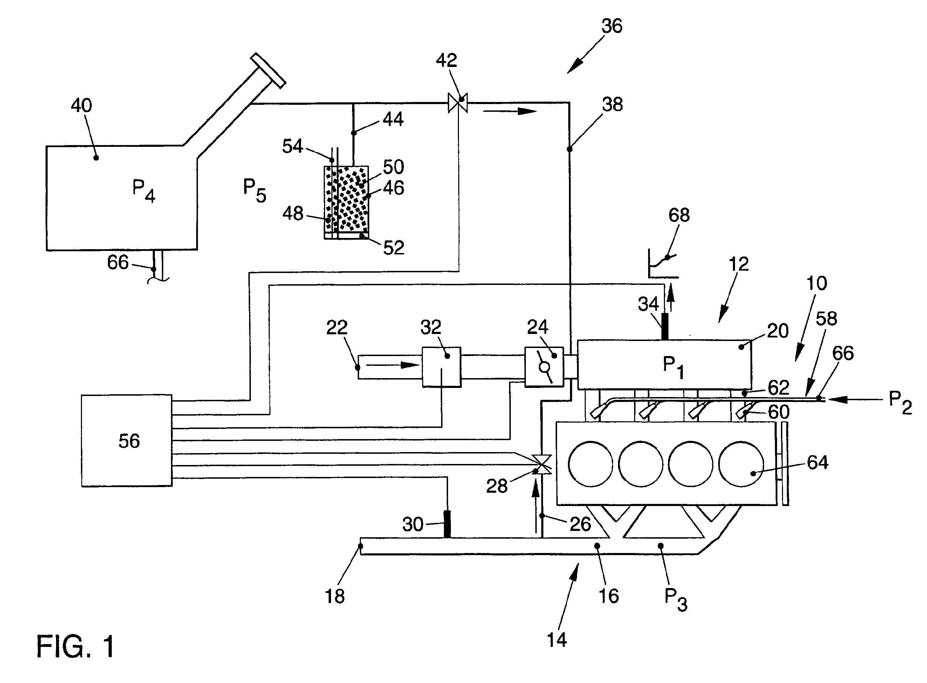

Figur 1 zeigt schematisch eine Verbrennungskraftmaschine 10. Der Verbrennungskraftmaschine 10 ist eine Sauganlage 12 und eine Abgasanlage 14 zugeordnet. Die Abgasanlage 14 umfaßt wenigstens einen Abgaskanal 16, der zu einem Abgasauslaß 18 führt. In dem Abgaskanal 16 kann wenigstens eine, hier nicht dargestellte Katalysatoreinrichtung integriert sein.

Die Sauganlage 12 umfaßt ein Saugrohr 20, über das von einer Quelle 22 mittels Unterdruck eine Verbrennungsluft der Verbrennungskraftmaschine zuführbar ist. Die Verbrennungsluftzufuhr ist mit einer Drosselklappe 24 regelbar.

Der Abgaskanal 16 ist mit dem Saugrohr 20 über eine Verbindungsleitung 26 verbunden, in die ein Abgasrückführungsventil 28 integriert ist. In den Abgaskanal 16 ist ferner eine Lambdasonde 30 integriert. Die Sauganlage 12 umfaßt ferner einen Luftmassensensor 32 sowie einen Saugrohrdrucksensor 34.

Der Verbrennungskraftmaschine 10 ist ferner ein Tankentlüftungssystem 36 zugeordnet. Das Tankentlüftungssystem 36 umfaßt eine Verbindungsleitung 38, die einen Tank 40 mit der Sauganlage 12 verbindet. Die Verbindungsleitung 38 mündet hierbei in das Saugrohr 20. In die Verbindungsleitung 38 ist ein Tankentlüftungsventil 42 integriert. Von der Verbindungsleitung 26 zweigt ferner eine Verbindung 44 zu einer Filtereinrichtung 46 ab. Die Filtereinrichtung 46 ist beispielsweise ein Aktivkohlebehälter 48, innerhalb dem eine Schüttung von Aktivkohle 50 angeordnet ist. Von einem der Aktivkohle 50 nachgeordneten Sammelraum 52 führt eine Verbindung 54 ins Freie.

Das Tankentlüftungsventil 42, der Saugrohrdrucksensor 34, der Luftmassensensor 32, die Drosselklappe 24, das Abgasrückführungsventil 28 und die Lambdasonde 30 sind über hier angedeutete Messleitungen beziehungsweise Steuerleitungen mit einem Motorsteuergerät 56 verbunden.

Der Verbrennungskraftmaschine 10 ist ferner ein Kraftstoff-Einspritzsystem 58 zugeordnet, das gemäß dem hier gezeigten Ausführungsbeispiel vier Einspritzventile 60 umfaßt, die in Verbindungsleitungen 62 des Saugrohres 20 zu den einzelnen Zylindern 64 der Verbrennungskraftmaschine 10 münden. Die Einspritzventile 60 sind mit einer Kraftstoffzuführung 66 verbunden und ebenfalls über das Motorsteuergerät 56 in bekannter Weise ansteuerbar.

Aufbau und Wirkungsweise der in Figur 1 gezeigten Verbrennungskraftmaschine 10 sind allgemein bekannt, so dass hier nur auf die allgemeine Funktion eingegangen werden soll.

Durch die Sauganlage 12 wird eine Verbrennungsluft zugeführt, die unter einem bestimmten Druck p1 steht. Die Menge der zugeführten Verbrennungsluft kann durch die in die Sauganlage 12 eingebaute Drosselklappe 24 integriert werden. Ferner steht der Kraftstoff in der Kraftstoffzuführung 66 unter einem Druck p2, der durch Ansteuerung von in Figur 1 nicht gezeigten Kraftstoff-Druckregelsystemen eingestellt werden kann. Dieser Druck p2 des Kraftstoffes wird so eingestellt, dass eine definierte Druckdifferenz zwischen dem Druck p2 des Kraftstoffes und dem Druck p1 der Verbrennungsluft gegeben ist. Bei geöffneten Einspritzventilen 60 ergibt sich daher eine Druckdifferenz zwischen dem Druck p2 und dem Druck p1, die über die Öffnungszeit der Einspritzventile 60 die den Verbrennungsprozess zugeführte Menge an Kraftstoff bestimmt. Dieses so erzeugte Kraftstoff-Luft-Gemisch wird innerhalb der Verbrennungskraftmaschine 10 verbrannt.

Das während des Verbrennungsprozesses entstehende Abgas wird über die Abgasanlage 14 gereinigt und abgeführt. Soll der Verbrennungsluft eine Teilmenge des Abgases zugeführt werden, wird das Abgasrückführungsventil 28 über das Motorsteuergerät 56 angesteuert. Das Abgasrückführungsventil 28 ist beispielsweise ein elektromagnetisches Proportionalventil. Über die Ansteuerung des Abgasrückführungsventils 28 kann die Menge des der Verbrennungsluft zugeführten Abgases eingestellt werden. Um die Menge des rückgeführten Abgases über der Zeit einstellen zu können, ist eine Druckdifferenz zwischen dem Druck p1 der Verbrennungsluft im Saugrohr 20 und einem Druck p3 des Abgases beziehungsweise die sich hieraus ergebende Druckdifferenz wichtig.

Ferner herrscht im Tank 40 ein Druck p4 sowie allgemein ein Umgebungsdruck der Verbrennungskraftmaschine p5. Steigt der Druck p4 im Tank 40 über den Umgebungsdruck p5 an, erfolgt über die Verbindungsleitung 38 sowie die Verbindung 44 und die Filtereinrichtung 46 eine Entlüftung des Tankes 40. Soll eine Reinigung der Filtereinrichtung 46 erfolgen, wird das Tankentlüftungsventil 42 geöffnet. Hierdurch liegt der Saugrohrdruck p1 am Tank 40 und der Filtereinrichtung 46 an. Da der Saugrohrdruck p1 geringer ist als der Druck p4 und der Druck p5, ergibt sich ein Druckgefälle, durch das die Kraftstoffdämpfe aus dem Tank 40 und die in der Aktivkohle 50 gespeicherten Kraftstoffdämpfe über das geöffnete Tankentlüftungsventil 42 angesaugt und der Verbrennungsluft der Verbrennungskraftmaschine 10 zugeführt werden.

Anhand der Erläuterungen wird deutlich, dass dem im Saugrohr 20 herrschenden Saugrohrdruck p1 für die Einstellung von Betriebsmodi der Verbrennungskraftmaschine 10 eine erhebliche Bedeutung zukommt. Damit das Motorsteuergerät 56 sowohl das Kraftstoff-Einspritzsystem 58, die Abgasrückführung und/oder die Tankentlüftung entsprechend externer Vorgaben, beispielsweise von einem Kraftfahrzeugführer, und/oder Betriebsbedingungen der Verbrennungskraftmaschine und einem im Saugrohr 20 herrschenden Saugrohrdruck p1 steuern beziehungsweise regeln kann, muss eine Genauigkeit des vom Saugrohrdrucksensor 34 gelieferten Sensorsignales 68 überprüft werden. Mögliche Fehler liegen beispielsweise in Alterungserscheinungen und/oder Herstellungstoleranzen des Saugrohrdrucksensors 34, die zu Messfehlern - und damit zu Fehlern des Sensorsignales 68 - führen könnten. Ferner können Verunreinigungen der Verbrennungsluft zu Funktionsbeeinträchtigungen des Saugrohrdrucksensors 34 führen.

Anhand der Erläuterungen der Funktion der Verbrennungskraftmaschine 10 wird deutlich, dass Ansteuerungen des Tankentlüftungsventils 42, des Abgasrückführungsventils 28, der Drosselklappe 24 und/oder Einspritzventile 60 zu einer Beeinflussung des Saugrohrdruckes p1 führen, da hierdurch Verbindungen zu unter abweichenden Drücken p2, p3, p4 beziehungsweise p5 stehenden Medien freigegeben werden. Somit ist für die Steuerung beziehungsweise Regelung der Verbrennungskraftmaschine 10 eine quantitative Aussage über die Eigenschaften des Saugrohrdrucksensors 34 wichtig.

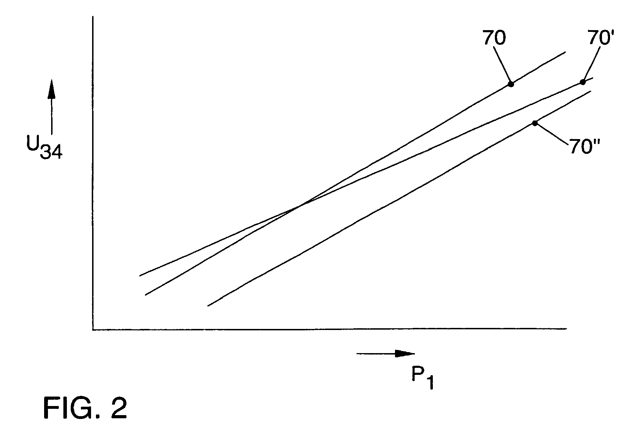

Figur 2 zeigt eine Soll-Kennlinie 70 des Saugrohrdrucksensors 34. Demnach ist jedem auftretenden Saugrohrdruck p1 eine bestimmte Sensorausgangsspannung U₃₄ (Sensorsignal 68) zugeordnet. Hierdurch ergibt sich eine Sollsteigung der Soll-Kennlinie 70.

Durch Herstellungstoleranzen, Alterungseinflüsse oder dergleichen kann das Sensorausgangssignal U₃₄ von seinem, einem bestimmten Saugrohrdruck p1 entsprechenden Sollwert abweicht. Dies würde zu einer fehlerhaften Meldung an das Motorsteuergerät 56 führen, so dass entsprechend abweichende Steuerbeziehungsweise Regelsignale an die weiteren Komponenten der Verbrennungskraftmaschine 10 gegeben würden, die - wie erläutert - das Kraftstoffeinspritzsystem, die Abgasrückführung und/oder die Tankentlüftung und weitere Betriebsmodi beeinflussen könnten.

Die Soll-Kennlinie 70 des Saugrohrdrucksensors 34 kann beispielsweise eine abweichende Steigung (Kennlinie 70') und/oder einen Offset (Kennlinie 70") aufweisen. Es wird deutlich, dass es hierdurch bei gleichem Saugrohrdruck p1 zu unterschiedlichen Sensorausgangsspannungen U₃₄ kommen kann.

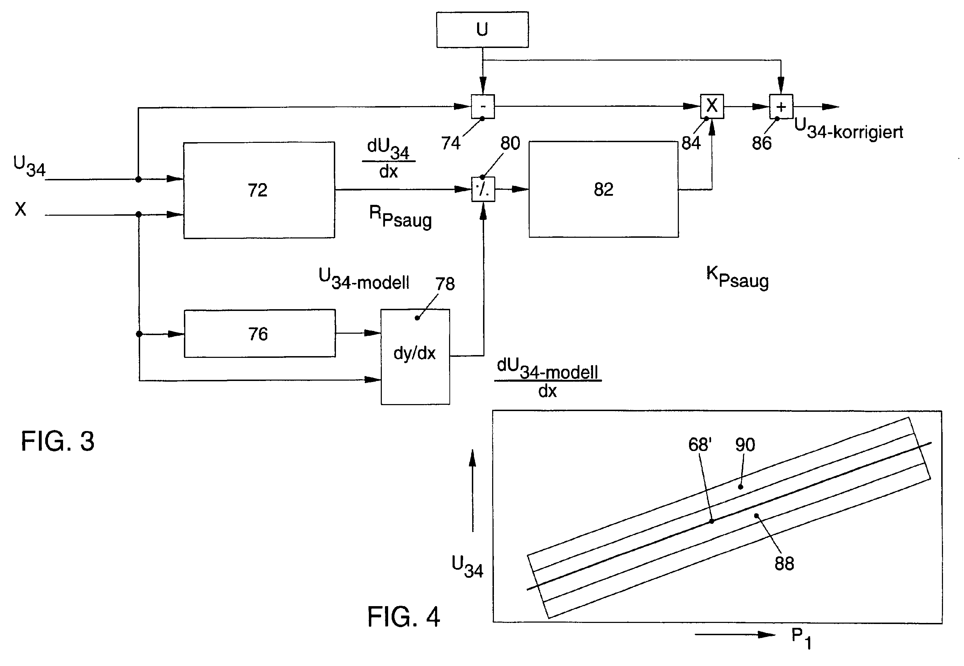

Figur 3 zeigt in einem Blockschaltbild die erfindungsgemäße Korrektur der Ist-Kennlinie des Saugrohrdrucksensors 34, mittels der beispielsweise der anhand von Figur 2 erläuterte Offset beziehungsweise die Steigungsabweichung der Kennlinie 70 ausgeglichen werden kann. Die einzelnen in Figur 3 gezeigten Bauelemente sind in das Motorsteuergerät 56 integriert.

Das Sensorsignal U₃₄ des Saugrohrdrucksensors 34 wird einerseits einer Regressionsrechnung 72 und andererseits einem Subtrahierglied 74 zugeführt. Der Regressionsrechnung 72 wird ferner ein Signal X zugeführt. Das Signal X beinhaltet beispielsweise ein Testmuster für eines der Ansteuersignale der Drosselklappe 24, des Abgasrückführungsventils 28, des Tankentlüftungsventils 42 oder anderer den Saugrohrdruck beeinflussender Stellsignale durch das Motorsteuergerät 56. Der Verdeutlichung wegen wird nachfolgend lediglich von dem Signal X gesprochen, wobei klar ist, dass dieses eines der genannten Signale sein kann. Das Signal X wird ferner einem Signalwandler 76 zugeführt, der eine Umrechnung zur Bestimmung der Soll-Kennlinie 70 umfaßt. Anhand der im Signalwandler 76 abgelegten Umrechnung wird aus dem Signal X ein Signal U_{34-modell} ermittelt, das einem Differenzierglied 78 zugeführt wird. Das Differenzierglied 78 wird gleichzeitig mit dem Signal X beaufschlagt. Am Ausgang des Differenziergliedes 78 liegt somit ein Signal dU_{34-modell} /dX an, das der Sollsteigung der Kennlinie 70 entspricht.

Am Ausgang der Regressionsrechnung 72 liegt ein Signal dU₃₄/dX an, das der Ist-Steigung der Kennlinie 70' beziehungsweise 70" entspricht. Dieses Signal entspricht dem Regressionsfaktor R_{Psaug} des Saugrohrdrucksensors 34. Dieser stellt die mittlere Steigung der Ist-Kennlinie 70' beziehungsweise 70" im Punkt des Saugrohrdruck-Sollwertes dar. Über ein Verhältnisglied 80 wird der Regressionsfaktor R_{Psaug} mit der Sollsteigung der Kennlinie 70 verknüpft und einem Adaptionsglied 82 zugeführt. Das Adaptionsglied 82 ermittelt aus dem Eingangssignal einen Korrekturfaktor K_{Psaug} für den Saugrohrdrucksensor 34.

Das Ist-Signal U₃₄ des Saugrohrdrucksensors 34 wird über das Subtrahierglied 74 mit einer konstanten Spannung U verknüpft. Die sich hieraus ergebende Differenz wird über ein Multiplizierglied 84 mit dem Korrekturfaktor K_{Psaug} verknüpft. Das Multiplizierglied 84 ist mit einem Summierglied 86 verbunden, über das der zuvor im Subtrahierglied 74 abgezogene konstante Spannungswert U den Signalen wieder aufaddiert wird, so dass als Ausgangssignal ein korrigiertes Spannungssignal U_{34-korrigiert} des Saugrohrdrucksensors 34 zur Verfügung steht und durch das Motorsteuergerät 56 für die Regelung der Verbrennungskraftmaschine 10 eingesetzt werden kann.

Der Regressionsfaktor R_{Psaug} wird bei jedem neu hinzukommenden Messwertpaar, dies ist die tatsächliche Messspannung U₃₄ des Saugrohrdrucksensors 34 und des Wertes X zu einem beliebigen Zeitpunkt, neu über alle Messwerte des Messzyklus berechnet. Der Messzyklus beginnt beispielsweise bei jedem Neustart der Verbrennungskraftmaschine 10. Hierdurch nimmt die Anzahl der in die Regression einbezogenen Messwerte mit jedem neuen Messwertpaar zu. Hierdurch wird erreicht, dass bereits nach kurzer Zeit, insbesondere innerhalb weniger Sekunden, der Verlauf des Regressionsfaktors R_{Psaug} sich der Sollsteigung der Soll-Kennlinie 70 annähert.

Es wird deutlich, dass durch die Signalverarbeitung erreicht wird, dass eine Abweichung der Steigung der Ist-Kennlinie 70', 70" von der Steigung der Sollkennlinie 70 in einfacher Weise korrigiert werden kann.

Figur 4 zeigt einen möglichen Kennlinienverlauf des Saugrohrdrucksensors 34, wobei die Sensorausgangsspannung U₃₄ über dem Saugrohrdruck p1 aufgetragen ist. Die Sensorkennlinie ist mit 68' gekennzeichnet, da diese dem tatsächlichen Verlauf des Sensorsignales 68 entspricht. Die Sensorkennlinie 68' kann beispielsweise den in Figur 2 angedeuteten Ist-Kennlinien 70' beziehungsweise 70" entsprechen. Neben der anhand von Figur 3 erläuterten Möglichkeit, den Korrekturfaktor zu ermitteln, um das Sensorausgangssignal U₃₄ zu korrigieren, lässt sich weiterhin ein Toleranzbereich des Sensorausgangssignals U₃₄ während des bestimmungsgemäßen Einsatzes des Saugrohrdrucksensors 34 ermitteln. Durch Überwachung der Toleranzbereiche lässt sich in einfacher Weise eine Onboard-Diagnose des Saugrohrdrucksensors 34 in das Motorsteuergerät 56 implementieren. Entsprechend den übermittelten Korrekturfaktoren K_{Psaug} wird die Abweichung der Sensorkennlinie 68' von der Soll-Kennlinie 70 (Figur 2) erfassbar. Der Sensorkennlinie 68' ist ein Toleranzbereich 88 benachbart, der einem erlaubten Toleranzbereich entspricht, das heißt, liegt die Kennlinie 68' innerhalb dieses erlaubten Toleranzbereiches 88, ist das vom Saugrohrdrucksensor 34 gelieferte Signal noch als akzeptabel zu betrachten. Liegt jedoch die Kennlinie 68' in einem Toleranzbereich 90, der dem erlaubten Toleranzbereich 88 benachbart ist, ist die Abweichung der Ist-Kennlinie von der Soll-Kennlinie so groß, dass eine Korrektur nicht mehr möglich ist. Bei Überschreiten des erlaubten Toleranzbereiches 88 kann auf geeignete Weise auf einen Austausch beziehungsweise eine Reparatur des Saugrohrdrucksensors 34 hingewiesen werden.

### BEZUGSZEICHENLISTE

- 10: Verbrennungskraftmaschine
- 12: Sauganlage
- 14: Abgasanlage
- 16: Abgaskanal
- 18: Auslasskanal
- 20: Saugrohr
- 22: Quelle
- 24: Drosselklappe
- 26: Verbindungsleitung
- 28: Abgasrückführungsventil
- 30: Lambdasonde
- 32: Luftmassensensor
- 34: Saugrohrdrucksensor
- 36: Tankentlüftungssystem
- 38: Verbindungsleitung
- 40: Tank
- 42: Tankentlüftungsventil
- 44: Verbindung
- 46: Filtereinrichtung
- 48: Aktivkohlebehälter
- 50: Aktivkohle
- 52: Sammelraum
- 54: Verbindung
- 56: Motorsteuergerät
- 58: Kraftstoff-Einspritzsystem
- 60: Einspritzventile
- 62: Verbindungsleitungen
- 64: Zylinder
- 66: Kraftstoffzuführung
- 68: Sensorsignal
- 68': Sensorkennlinie
- 70: Soll-Kennlinie des Saugrohrdrucksensors
- 70': Ist-Kennlinie
- 70": Ist-Kennlinie
- 72: Regressionsrechnung
- 74: Subtrahierglied
- 76: Signalwandler
- 78: Differenzierglied
- 80: Verhältnisglied
- 82: Adaptionsglied
- 84: Multiplizierglied
- 86: Summierglied
- 88: Toleranzbereich
- 90: Toleranzbereich
- p1: Druck der Verbrennungsluft / Saugrohrdruck
- p2: Druck des Kraftstoffes
- p3: Druck des Abgases
- p4: Druck im Tank
- p5: Umgebungsdruck der Verbrennungskraftmaschine
- X: Signal
- U: Spannung
- U₃₄: Signal der Sensorausgangsspannung
- U_{34-modell}: Signal der Sensorausgangsspannung
- K_{Psaug}: Korrekturfaktor des Saugrohrdrucksensor
- R_{Psaug}: Regressionsfaktor des Saugrohrdrucksensors

## Patentansprüche

1. Verfahren zur Regelung einer Verbrennungskraftmaschine, wobei ein Druck einer Verbrennungsluft der Verbrennungskraftmaschine mittels eines Saugrohrdrucksensors gemessen wird und ein dem momentanen Druck entsprechendes Sensorsignal einem Steuergerät übermittelt wird und das Steuergerät hieraus wenigstens ein, die Zusammensetzung eines der Verbrennungskraftmaschine zugeführten Kraftstoff-Luft-Gemisch beeinflussendes Stellsignal generiert, **dadurch gekennzeichnet, dass** eine Steigung der Ist-Kennlinie des Saugrohrdrucksensors ermittelt wird, eine Abweichung der Steigung von einer Soll-Kennlinie ermittelt wird und aus der Abweichung ein Korrekturwert ermittelt wird, mit dem das Sensorsignal des Saugrohrdrucksensors korrigiert wird, um die Abweichung der Steigung der Ist-Kennlinie von der Steigung der Soll-Kennlinie zu korrigieren.

2. Verfahren nach Anspruch 1, **dadurch gekennzeichnet, dass** eine Steigung der Ist-Kennlinie (70', 70") durch eine Regressionsrechnung ermittelt wird.

3. Verfahren nach einem der vorhergehenden Ansprüche, **dadurch gekennzeichnet, dass** der Regressionsrechnung das Ist-Signal (U34) des Saugrohrdrucksensors (34) und ein Testmuster-Signal (X) eines die Zusammensetzung des Kraftstoff-Luft-Gemisches beeinflussenden Stellsignals zugeführt wird.

4. Verfahren nach Anspruch 3, **dadurch gekennzeichnet, dass** das Signal (X) ein Testmuster eines Ansteuersignales eines Abgasrückführungsventiles ist.

5. Verfahren nach Anspruch 3, **dadurch gekennzeichnet, dass** das Signal (X) das Testmuster eines Ansteuersignales eines Tankentlüftungsventiles ist.

6. Verfahren nach Anspruch 3, **dadurch gekennzeichnet, dass** das Signal (X) das Testmuster eines Ansteuersignales einer Drosselklappe ist.

7. Verfahren nach Anspruch 3, **dadurch gekennzeichnet, dass** das Signal (X) das Testmuster eines Ansteuersignales eines Einspritzventiles ist.

8. Verfahren nach einem der vorhergehenden Ansprüche, **dadurch gekennzeichnet, dass** die Steigung der Soll-Kennlinie (70) aus einer bekannten Soll-Kennlinie und dem Signal (X) ermittelt wird.

9. Verfahren nach eine der vorhergehenden Ansprüche, **dadurch gekennzeichnet, dass** ein Regressionsfaktor (RPsaug) der Regressionsrechnung mit der Steigung der Soll-Kennlinie (70) verknüpft wird und hieraus ein Korrekturfaktor (KPsaug) für das Ist-Signal (U₃₄) ermittelt wird.

10. Verfahren nach einem der vorhergehenden Ansprüche, **dadurch gekennzeichnet, dass** der Regressionsfaktor (RPsaug) in vorgebbaren Zeitschritten mit jedem neu hinzukommenden Messwertpaar des Ist-Signales (U₃₄) und des Signals (X) neu über alle Messwerte des Messzyklus ermittelt wird.

11. Verfahren nach einem der vorhergehenden Ansprüche, **dadurch gekennzeichnet, dass** der Regressionsfaktor (RPsaug) und/oder der Korrekturfaktor (KPsaug) für eine Onboard-Diagnose eines die Verbrennungskraftmaschine aufweisenden Kraftfahrzeuges eingesetzt wird.

12. Vorrichtung zur Regelung einer Verbrennungskraftmaschine, die wenigstens einen, in einem Saugrohr angeordneten Saugrohrdrucksensor umfaßt sowie ein Steuergerät besitzt, mittels dem ein von dem Saugrohrdrucksensor geliefertes Signal erfassbar ist und das Mittel zur Bereitstellung von die Zusammensetzung eines der Verbrennungskraftmaschine zugeführten Kraftstoff-Luft-Gemisch beeinflussenden Stellsignalen umfaßt, **gekennzeichnet durch** Mittel (72), mittels denen eine Steigung einer Ist-Kennlinie (70', 70") des Saugrohrdrucksensors (34) ermittelbar ist, und Mittel (76, 78), mittels denen eine Steigung einer Soll-Kennlinie (70) des Saugrohrdrucksensors ermittelbar ist, und Mitteln (80, 82) zum Ermitteln eines Korrekturwertes (KPsaug) des Signals (U34) des Saugrohrdrucksensors (34) zur Korrektur einer Abweichung der Steigung der Ist-Kennlinie (70', 70") von der Steigung der Soll-Kennlinie (70).

## Claims

1. Method for controlling an internal combustion engine, wherein a pressure of combustion air of the internal combustion engine is measured by means of an intake manifold pressure sensor and a sensor signal which corresponds to the instantaneous pressure is transmitted to a control unit and the control unit generates therefrom at least one adjustment signal which influences the composition of a fuel/air mixture which is fed to the internal combustion engine, **characterized in that** a gradient of the actual characteristic curve of the intake manifold pressure sensor is determined, a deviation of the gradient from a set point characteristic curve is determined and a correction value is determined from the difference, said correction value being used to correct the sensor signal of the intake manifold pressure sensor in order to correct the difference between the gradient of the actual characteristic curve and the gradient of the set point characteristic curve.

2. Method according to Claim 1, **characterized in that** a gradient of the actual characteristic curve (70', 7") is determined by means of a regression calculation.

3. Method according to one of the preceding claims, **characterized in that** the actual signal (U34) of the intake manifold pressure sensor (34) and a test pattern signal (X) of an adjustment signal which influences the composition of the fuel/air mixture are fed to the regression calculation.

4. Method according to Claim 3, **characterized in that** the signal (X) is a test pattern of an actuation signal of an exhaust gas recirculation valve.

5. Method according to Claim 3, **characterized in that** the signal (X) is the test pattern of an actuation signal of a fuel tank venting valve.

6. Method according to Claim 3, **characterized in that** the signal (X) is the test pattern of an actuation signal of a throttle valve.

7. Method according to Claim 3, **characterized in that** the signal (X) is the test pattern of an actuation signal of an injection valve.

8. Method according to one of the preceding claims, **characterized in that** the gradient of the set point characteristic curve (70) is determined from a known set point characteristic curve and the signal (X).

9. Method according to one of the preceding claims, **characterized in that** a regression factor (RPsaug) of the regression calculation is logically combined with the gradient of the set point characteristic curve (70) and a correction factor (KPsaug) for the actual signal (U34) is determined therefrom.

10. Method according to one of the preceding claims, **characterized in that** the regression factor (RPsaug) is newly determined at predefinable time intervals with each newly added measured value pair of the actual signal (U34) and of the signal (X) over all the measured values of the measurement cycle.

11. Method according to one of the preceding claims, **characterized in that** the regression factor (RPsaug) and/or the correction factor (KPsaug) is used for an onboard diagnosis of a motor vehicle which has the internal combustion engine.

12. Device for controlling an internal combustion engine which comprises at least one intake manifold pressure sensor which is arranged in an intake manifold, and has a control unit by means of which a signal which is supplied by the intake manifold pressure sensor can be sensed and which comprises means for making available adjustment signals which influence the composition of a fuel/air mixture which is fed to the internal combustion engine, **characterized by** means (72) by means of which a gradient of an actual characteristic curve (70', 70") of the intake manifold pressure sensor (34) can be determined, and means (76, 78) by means of which a gradient of a set point characteristic curve (70) of the intake manifold pressure sensor can be determined, and means (80, 82) for determining a correction value (KPsaug) of the signal (U34) of the intake manifold pressure sensor (34) for correcting a difference between the gradient of the actual characteristic curve (70', 70") and the gradient of the set point characteristic curve (70).

## Revendications

1. Procédé pour réguler un moteur à combustion interne, une pression d'un air de combustion du moteur à combustion interne étant mesurée au moyen d'un capteur de pression à tube d'aspiration et un signal de capteur correspondant à la pression momentanée étant communiqué à un module de commande et le module de commande générant à partir de cela au moins un signal de contrôle qui influence la composition d'un mélange carburant/air qui est acheminé au moteur à combustion interne, **caractérisé en ce qu'**il est déterminé une pente de la courbe caractéristique réelle du capteur de pression à tube d'aspiration, un écart est déterminé entre la pente et une courbe caractéristique de consigne et à partir de l'écart est déterminée une valeur de correction avec laquelle est corrigé le signal de capteur du capteur de pression à tube d'aspiration afin de corriger l'écart entre la pente de la courbe caractéristique réelle et la pente de la courbe caractéristique de consigne.

2. Procédé selon la revendication 1, **caractérisé en ce qu**'une pente de la courbe caractéristique réelle (70', 70") est déterminée par un calcul de régression.

3. Procédé selon l'une des revendications précédentes, **caractérisé en ce que** le signal réel (U34) du capteur de pression à tube d'aspiration (34) et un signal de modèle de test (X) d'un signal de contrôle qui influence la composition d'un mélange carburant/air sont acheminés au calcul de régression.

4. Procédé selon la revendication 3, **caractérisé en ce que** le signal (X) est un modèle de test d'un signal de commande d'une vanne de retour des gaz d'échappement.

5. Procédé selon la revendication 3, **caractérisé en ce que** le signal (X) est un modèle de test d'un signal de commande d'une soupape de purge du réservoir.

6. Procédé selon la revendication 3, **caractérisé en ce que** le signal (X) est un modèle de test d'un signal de commande d'un papillon d'étranglement.

7. Procédé selon la revendication 3, **caractérisé en ce que** le signal (X) est un modèle de test d'un signal de commande d'un injecteur.

8. Procédé selon l'une des revendications précédentes, **caractérisé en ce que** la pente de la courbe caractéristique de consigne (70) est déterminée à partir d'une courbe caractéristique de consigne connue et du signal (X).

9. Procédé selon l'une des revendications précédentes, **caractérisé en ce qu'**un facteur de régression (RPsaug) du calcul de régression est combiné avec la pente de la courbe caractéristique de consigne (70) et qu'à partir de cela est déterminé un facteur de correction (KPsaug) pour le signal réel (U34).

10. Procédé selon l'une des revendications précédentes, **caractérisé en ce que** le facteur de régression (RPsaug) est de nouveau déterminé sur toutes les valeurs mesurées du cycle de mesure à des intervalles de temps pouvant être prédéfinis avec chaque nouvelle paire de valeurs mesurées arrivante du signal réel (U34) et du signal (X).

11. Procédé selon l'une des revendications précédentes, **caractérisé en ce que** le facteur de régression (RPsaug) et/ou le facteur de correction (KPsaug) est utilisé pour un diagnostic embarqué d'un véhicule automobile qui est équipé du moteur à combustion interne.

12. Dispositif pour réguler un moteur à combustion interne, lequel comprend au moins un capteur de pression à tube d'aspiration qui est disposé dans un tube d'aspiration ainsi qu'un module de commande au moyen duquel peut être acquis un signal délivré par le capteur de pression à tube d'aspiration et qui comprend des moyens pour fournir des signaux de contrôle qui influencent la composition d'un mélange carburant/air qui est acheminé au moteur à combustion interne, **caractérisé par** des moyens (72) qui permettent de déterminer une pente d'une courbe caractéristique réelle (70', 70") du capteur de pression à tube d'aspiration (34) et des moyens (76, 78) qui permettent de déterminer une pente d'une courbe caractéristique de consigne (70) du capteur de pression à tube d'aspiration (34) ainsi que des moyens (80, 82) pour déterminer une valeur de correction (KPsaug) du signal (U34) du capteur de pression à tube d'aspiration (34) afin de corriger un écart entre la pente de la courbe caractéristique réelle (70', 70") et la pente de la courbe caractéristique de consigne (70).
